(19) Europäisches Patentamt
European Patent Office
Office européen des brevets

(11) **EP 3 712 670 B1**

(12) **EUROPÄISCHE PATENTSCHRIFT**

(45) Veröffentlichungstag und Bekanntmachung des Hinweises auf die Patenterteilung:
**30.10.2024 Patentblatt 2024/44**

(21) Anmeldenummer: **20162367.5**

(22) Anmeldetag: **11.03.2020**

(51) Internationale Patentklassifikation (IPC):
**G02B 21/00** *(2006.01)* **G02B 21/36** *(2006.01)*

(52) Gemeinsame Patentklassifikation (CPC):
**G02B 21/002; G02B 21/008; G02B 21/367;**
G02B 27/58

(54) **VERFAHREN ZUR HOCHAUFLÖSENDEN SCANNING-MIKROSKOPIE**

METHOD FOR HIGH-RESOLUTION SCANNING MICROSCOPY

PROCÉDÉ DE MICROSCOPIE À BALAYAGE HAUTE RÉSOLUTION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.03.2019 DE 102019107267**

(43) Veröffentlichungstag der Anmeldung:
**23.09.2020 Patentblatt 2020/39**

(73) Patentinhaber: **Carl Zeiss Microscopy GmbH**
**07745 Jena (DE)**

(72) Erfinder:
• **Kalinin, Stanislav**
**07745 Jena (DE)**
• **Kudryavtsev, Volodymyr**
**07745 Jena (DE)**
• **Egloff, Thomas**
**07745 Jena (DE)**
• **Kolarow, Alexander**
**07745 Jena (DE)**
• **Engel, Jörg**
**07745 Jena (DE)**

(74) Vertreter: **Gleim Petri Patent- und Rechtsanwaltspartnerschaft mbB**
**Neugasse 13**
**07743 Jena (DE)**

(56) Entgegenhaltungen:
WO-A1-2005/064913    WO-A2-2010/101894
DE-A1- 102014 111 167    DE-A1- 102015 116 598
DE-A1- 102017 122 858    US-A1- 2012 057 446
US-A1- 2018 321 154

• KLAUS WEISSHART: "The Basic Principle of Airyscanning", 31 July 2014 (2014-07-31), XP055508368, Retrieved from the Internet <URL:https://www.embl.de/services/core_faciliti es/almf/events_ext/2017/EN_wp_LSM-880_Basi c-Principle-Airyscan.pdf> [retrieved on 20180920]

## Beschreibung

### Gebiet der Erfindung

Die Erfindung bezieht sich auf ein Verfahren zur hochauflösenden Scanning-Mikroskopie einer Probe, wobei die Probe mit Beleuchtungslicht derart beleuchtet wird, dass das Beleuchtungslicht an einem Punkt in oder auf der Probe zu einem bevorzugt beugungsbegrenzten Beleuchtungsfleck gebündelt wird. Der Punkt wird dann in ein Beugungsbild auf einen Pixel aufweisenden Flächendetektor abgebildet, die Abbildung erfolgt beugungsbegrenzt, wenn der Beleuchtungsfleck beugungsbegrenzt ist. Der Flächendetektor weist dabei durch seine Pixel eine Ortsauflösung auf, die eine Beugungsstruktur des Beugungsbildes auflöst. Die Probe wird dann in einem Raster aus Zeilen und Spalten zeilenweise abgetastet, indem der Punkt relativ zur Probe in verschiedene Scanpositionen mit einer Schrittweite verschoben wird, welche kleiner als der Durchmesser des Beleuchtungsflecks ist. Insbesondere bei sogenannten Multiplex-Aufnahmen ist der Beleuchtungsfleck in einer Richtung, der der Spalten, größer als beugungsbegrenzt, so dass mehrere Zeilen gleichzeitig abgetastet werden können. In jeder Scanposition wird ein Bild mit dem Flächendetektor aufgenommen. Nach jeder Aufnahme wird der Flächendetektor ausgelesen. Aus den Daten des Flächendetektors und aus den diesen Daten zugeordneten Scanpositionen wird dann ein Bild der Probe erzeugt, welches eine Auflösung aufweist, die über eine Auflösungsgrenze der Abbildung gesteigert ist.

### Stand der Technik

Eine klassische Ausprägung der Lichtmikroskopie ist die Laser-Scanning-Mikroskopie (LSM), die mittels einer konfokalen Detektionsanordnung nur diejenige Ebene der Probe abbildet, die sich in der Fokusebene des Objektivs befindet. Dabei wird ein optischer Schnitt gewonnen, dessen Dicke von der Größe der konfokalen Blende abhängt. Die Aufzeichnung mehrerer optischer Schnitte in verschiedenen Tiefen der Probe erlaubt es, ein dreidimensionales Bild der Probe zu erzeugen, welches dann aus den verschiedenen optischen Schnitten zusammengesetzt ist. Mittels LSM lassen sich also auch dickere Proben untersuchen.

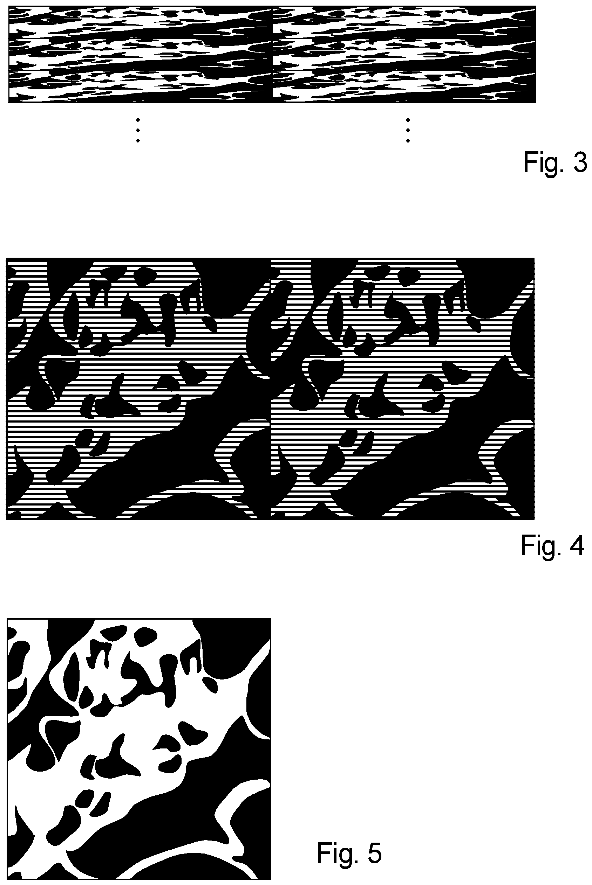

Grundsätzlich ist die optische Auflösung eines Lichtmikroskops durch die physikalischen Gesetze beugungsbegrenzt. Unter dem Begriff "hochauflösend" wird im Folgenden eine Auflösung jenseits dieser Beugungsgrenze verstanden. Im Stand der Technik sind verschiedene Verfahren zur Überwindung dieser Beugungsgrenze bekannt. Eines dieser Verfahren ist die sogenannte Airy-Scan-Mikroskopie, wie sie beispielsweise in der EP 2 317 362 A1 beschrieben wird. Diese kombiniert in der dort in Fig. 5 dargestellten und beschriebenen Ausführungsform eine beugungsbegrenzte Beleuchtung der Probe mit einem Flächendetektor, wobei die dort verwendete Scan-Einrichtung so ausgebildet ist, dass das Beugungsbild des mit dem Beleuchtungsfleck beleuchteten Punktes auf dem Flächendetektor ruht - eine solche Anordnung des Detektors wird auch als "descanned" bezeichnet. Dazu wird in der Regel ein Scanner, welcher den Strahlengang ablenkt, zwischen der Probe und dem Vereinigungspunkt von Beleuchtungseinrichtung und Abbildungseinrichtung angeordnet. Ein solcher Scanner wirkt sowohl auf den Beleuchtungsfleck als auch auf die Abbildung des mit dem Beleuchtungsfleck beleuchteten Punktes, so dass in Abbildungsrichtung nach dem Scanner der Strahlengang ruht. Eine Alternative zu einem solchen Scanner ist die Verwendung eines bewegbaren Probentisches, welcher die Probe verschiebt. Auch dann ruht das Beugungsbild auf dem Flächendetektor. Im Konzept der EP 2 317 362 A1 ist der Flächendetektor mit einer Ortsauflösung versehen, die es erlaubt, die Struktur des Beugungsbildes aufzulösen.

Das grundlegende Prinzip der Airy-Scan-Mikroskopie wird beispielsweise in dem Fachartikel "The Basic Principle of Airyscanning" von Klaus Weisshart, von der Anmelderin veröffentlicht im Juli 2014, ausführlich erläutert.

Während beim traditionellen Laser-Scanning-Mikroskop eine Kombination von Pinhole und Detektor verwendet wird, wird hier ein sogenannter Airy-Scan-Detektor verwendet, bei dem es sich um einen Flächendetektor mit einer Vielzahl von Detektorelementen handelt, welche beispielsweise hexagonal ausgebildet und in Wabenstruktur angeordnet sein können. Aufgrund der Anordnung in der Pinhole-Ebene wirkt jedes Detektorelement selbst als einzelnes, extrem kleines Pinhole. Da die Anordnung der Detektorelemente zueinander bekannt ist, lässt sich mittels Berechnung aus den aufgenommenen Intensitätswerten ein hochauflösendes Bild mit einer Auflösung, welche höher als die Beugungsgrenze ist, verglichen mit einem Laser-Scanning-Mikroskop mit einem Pinhole von einer Airy-Einheit, erzeugen.

Die hohe Anzahl von Einzeldetektoren - ein typischer Airy-Scan-Detektor besteht beispielsweise aus 32 einzelnen hexagonalen Detektorelementen - erhöht jedoch insbesondere den rechnerischen Aufwand bei der Gewinnung des Gesamtbildes der Probe. Entsprechend mehr Signale müssen verarbeitet werden. Für jeden abgetasteten Punkt $P(\vec{r}, z)$ werden eine Anzahl $H$ Signale $D_h(\vec{r}, z)$ detektiert, wobei $H$ der Anzahl der Detektorelemente entspricht. $\vec{r}$ bezeichnet die laterale Probenposition, $z$ die axiale Probenposition. Der Index $h$ bezeichnet das jeweilige Detektorelement.

Jedes der Detektorelemente erfasst während der Abtastung ein Rohbild von der Probe, bestehend aus den Signalen $D_h(\vec{r}, z)$. Die Rohbilder unterscheiden sich voneinander, wobei die Unterschiede durch den lateralen Abstand des Beleuchtungsflecks relativ zum vom jeweiligen Detektorelement detektierten Probenbereich bestimmt sind. Die Rohbilder werden mathematisch durch eine Faltung des tatsächlichen Probenbildes $O(\vec{r},$

*z*) mit der Punktbildübertragungsfunktion - auch als Punktspreizfunktion PSF (*point spread function*) bezeichnet - $I_h(\vec{r}, z)$ des jeweiligen Detektorelements *h* beschrieben:

$$D_h(\vec{r}, z) = I_h(\vec{r}, z) * O(\vec{r}, z)$$

Die Punktspreizfunktionen $I_h(\vec{r}, z)$ sind dem System aufgrund seiner Eigenschaften bekannt. Sie können aus Systemparametern berechnet oder einmalig gemessen und hinterlegt werden. Im bekannten Stand der Technik werden die Signale aller Detektoren an eine Auswerteinheit außerhalb des Mikroskops übermittelt, dort wird ein Bild $\tilde{O}(\vec{r}, z)$ zusammengesetzt, das möglichst genau dem Original der Probe $O(\vec{r}, z)$ entspricht. Das wird durch eine Entfaltung und anschließende Zusammensetzung der so entfalteten Rohbilder erreicht, wobei die Prozesse Entfaltung und Zusammensetzung prozesstechnisch ineinander übergehen können.

Dies ist beispielsweise in Fig. 3 der nicht vorveröffentlichten deutschen Anmeldung DE 10 2017 122 858.6 gezeigt und im Zusammenhang damit beschrieben.

Bei der Abtastung der Probe sind die Verschiebungen kleiner als der Durchmesser des Beleuchtungsflecks, so dass dieselben Stellen in der Probe von verschiedenen Einzeldetektoren *h* aufgenommen werden. Auch dies muss bei der Erzeugung des Gesamtbildes der Probe berücksichtigt werden. Um das Gesamtbild der Probe in einer Schnittebene *z* zu erzeugen, müssen somit nicht nur die Signale der einzelnen Detektorelemente *h* miteinander verrechnet werden, sondern es müssen diese noch zum Bild in der Probenebene *z* zusammengefügt werden. Bei beispielsweise 32 verwendeten Detektoren werden 32 Rohdatensätze erzeugt, jeder der Rohdatensätze korrespondiert zu einen Detektorelement *h*. Die Rohdatensätze weisen alle die gleiche Größe auf, Unterschiede in den Intensitätswerten in den Pixeln kommen zustande durch die relative laterale Verschiebung der Detektorelemente in Bezug zueinander bzw. in Bezug auf ein zentrales Detektorelement, welches als Bezugselement dient. Die laterale Verschiebung in Bezug auf das zentrale Detektorelement ist also für jedes Pixel in einem Rohdatenbild immer dieselbe.

Um den Verarbeitungsaufwand zu verringern und einen Teil der Verarbeitung bereits "on the fly", also während oder direkt nach Aufnahme noch im Mikroskop und vor der Übermittlung der Daten vom Mikroskop an eine Steuer- und Auswerteeinheit, in der Regel einen PC, oder nach einer Übertragung an die Steuer- und Auswerteeinheit, ohne die Rohdaten zu speichern, vorzunehmen, kann man genau diese Tatsache ausnutzen, dass sich die einzelnen Rohbilddatensätze - jeder Rohbilddatensatz korrespondiert zu einem Detektorelement des Flächendetektors - lateral, also in Richtung $\vec{r}$, im Wesentlichen nur durch eine Verschiebung $s_h$ untereinander un-

terscheiden.

Dieser Umstand wird ausgenutzt, um ein vorverrechnetes Rohbild mit höherer Auflösung zu erzeugen. Die Verschiebungen - im Folgenden als $s_h$ bezeichnet - sind eine Funktion der Punktspreizfunktionen $I_h(\vec{r}, z)$ und lassen sich mit relativ geringem Aufwand berechnen. Die Rohbilder werden um die Verschiebungen $s_h$ zurückgeschoben und anschließend addiert, und zwar für jede Ebene z unabhängig von den anderen. Das resultierende vorverrechnete Rohbild $\tilde{D}(\vec{r}, z)$ hat bereits eine höher Auflösung als beugungstechnisch möglich wäre und wird als sogenannte Sheppard-Summe bezeichnet:

$$\tilde{D}(\vec{r}, z) = \sum_h D_h(\vec{r} - \vec{s}_h, z)$$

Dieses vorverrechnete Rohbild, welches auch einem Benutzer angezeigt werden kann, enthält möglicherweise noch Artefakte, die in einem weiteren Bearbeitungsschritt beseitigt werden müssen.

Wird die Probe beispielsweise bidirektional rasterförmig in Zeilen und Spalten zeilenweise in einer Vorwärtsrichtung und einer dazu entgegengesetzten Rückwärtsrichtung abgetastet, so sind die aufgenommenen Bildzeilen für Vorwärts- und Rückwärtsrichtung aus technischen Gründen, die mit dem Antriebsmechanismus des Scanners zusammenhängen, entlang der Abtastrichtung leicht versetzt. Dieser Versatz kann anhand von einander überlappender Datenbereichen bestimmt werden, die miteinander korreliert werden müssen. Dies erfordert die Übertragung sämtlicher Rohbilddatensätze an die Steuer- und Auswerteeinheit. Nach Bestimmung des Versatzes, auch als Verschiebung bezeichnet, können die Rohbilddatensätze um diese Verschiebungen korrigiert werden. Danach wird erneut das vorverrechnete Rohbild als Sheppard-Summe aus den einzelnen Rohbilddatensätzen bestimmt und anschließend optional noch von streifenförmigen Artefakten befreit (*Destriping*). Abschließend findet noch eine Entfaltung mit der Punktspreizfunktion $\tilde{I}(\vec{r}) = \Sigma_h I_h(\vec{r} - \vec{s}_h, z)$ - dies erfolgt rechentechnisch vorteilhaft im Fourierraum, da eine Faltung im Ortsraum einer Multiplikation im Fourierraum entspricht - statt und man erhält das Bild der Probe. Zu den Einzelheiten der Berechnung einschließlich der Berücksichtigung eines Wiener-Filters zur Rauschunterdrückung wird hier auf die DE 10 2017 122 858.6 verwiesen.

Die Korrektur dieser Artefakte, welche aufgrund des bidirektionalen Abtastens entstehen, ist zeitaufwendig, da erst ein Übersichtsrohbild erzeugt werden muss, und danach anschließend alle Rohdaten korrigiert werden müssen, bevor wieder ein vorverrechnetes Übersichtsrohbild erzeugt wird. Dies erfordert die Übertragung großer Datenmengen vom Mikroskop an die Steuer- und Auswerteeinrichtung sowie deren Verarbeitung dort, und kann den Prozess bis zur Darstellung des Bildes spürbar verlangsamen.

## Beschreibung der Erfindung

Aufgabe der Erfindung ist es daher, die Aufnahme und die insbesondere die Verarbeitung insbesondere im Hinblick auf die Korrektur der oben beschriebenen Artefakte durch bidirektionales Abtasten zu beschleunigen und die benötigten Datenmengen zu verringern.

Diese Aufgabe wird bei einem Verfahren der eingangs beschriebenen Art, bei dem die Probe zeilenweise abgetastet wird, dadurch gelöst, dass für jede aufgenommene Zeile vorverrechnete Zeilenrohbilder berechnet werden und die vorverrechneten Zeilenrohbilder zusammengefasst und entfaltet werden, um das Bild der Probe zu erzeugen.

Die vorverrechneten Zeilenrohbilder werden bevorzugt unmittelbar nach der Aufnahme der jeweiligen Zeile, also bereits während die nächste Zeile abgetastet wird, berechnet. Im Gegensatz zum Stand der Technik werden dann also nicht erst für jedes Detektorelement vollständige Datensätze mit einer Vielzahl von Zeilen und Spalten generiert, sondern die Zeilen werden getrennt voneinander betrachtet, was grundsätzlich möglich ist, da es sich bei dem nächsten Schritt, der Vorverrechnung, d.h. der Bildung der Sheppard-Summe in den Koordinaten des Bildes, um eine lineare Operation handelt, die im Prinzip in beliebig viele Einzelschritte zerlegt werden kann. Die Bildung vollständiger Datensätze und anschließender zeilenweiser Vorverrechnung ist selbstverständlich ebenso möglich. Auch können erst mehrere Zeilen aufgenommen werden, an die Auswerteeinheit übertragen und dort zeilenweise verrechnet werden.

Die vorverrechneten Zeilenrohbilder können auf verschiedene Weisen zusammengefasst werden, bevor die Entfaltung erfolgt. Im einfachsten Fall erfolgt die Zusammenfassung aller Zeilenrohbilder ohne weitere Zwischenschritte, d.h. es wird die pixelweise Summe aus allen vorverrechneten Zeilenrohbildern gebildet und so ein Rohbild der Probe erzeugt, welches auch als Vorschaubild verwendet werden kann. Diese Vorgehensweise ist beispielsweise dann vorteilhaft, wenn das Scannen nur in eine Richtung, d.h. unidirektional erfolgt, oder auch beim zeilenweisen *Multi-Tracking.* Bei dem auch als "*Line-wise multi tracking"* bezeichneten Aufnahmeverfahren wird z. B. in Vorwärtsscanrichtung die Probe mit einem grünen Laser (Track 1) und in Rückwärtsrichtung mit einem roten Laser (Track 2) abgetastet.

In einer besonders bevorzugten Ausgestaltung werden jedoch die Zeilen in zueinander komplementären Gruppen zusammengefasst. Für jede der Gruppen wird aus den vorverrechneten Zeilenrohbildern ein vorverrechnetes Gruppenrohbild zusammengesetzt, d.h. hier findet keine weitere Berechnung statt, abgesehen davon, dass darauf geachtet werden muss, dass jedes Zeilenrohbild im Gruppenrohbild an der richtigen Zeilenposition eingefügt wird. An den vorverrechneten Gruppenrohbildern können optional noch Korrekturen vorgenommen werden, die sich auf das jeweilige Gruppenrohbild auswirken. Ein dem Vorschaubild kann erzeugt werden, indem die pixelweise Summe aller Gruppenrohbilder gebildet wird. Da die Zeilen in zueinander komplementären Gruppen zusammengefasst werden, taucht jede Zeile nur ein einziges Mal und nur in einem der Gruppenrohbilder auf. Das Bild der Probe schließlich wird erzeugt, indem die vorverrechneten Gruppenrohbilder zum Rohbild - ohne Anwendung weiterer Korrekturen handelt es sich dabei um das Vorschaubild - zusammengefasst und entfaltet werden, d.h. die vorverrechneten Zeilenrohbilder werden hier über den Zwischenschritt der Bildung von Gruppenrohbildern zusammengefasst. Die Zusammenfassung der Gruppenrohbilder besteht üblicherweise aus der pixelweisen Summe der Gruppenrohbilder sowie der anschließenden Entfaltung mit der entsprechenden, aufsummierten Punktspreizfunktion für alle Detektorelemente. Durch die Zusammenfassung der Zeilen in zueinander komplementären Gruppen erhält man die Möglichkeit, auf ganze Gruppen von Zeilen unterschiedlichste Korrekturen oder Modifikationen anzuwenden. Beispielsweise lassen sich Korrekturen hinsichtlich des Orts oder der Helligkeit zw. Signalstärke anwenden, wenn es zwischen den Zeilen dazu zu einem Versatz oder einer Störung kommen sollte. Auch lassen sich periodische Störungen im Signal korrigieren.

Ein besonderer Vorteil ergibt sich dabei, wenn die Probe bidirektional, d.h. in einer Vorwärts- und in einer Rückwärtsrichtung abgetastet wird. In einer ersten Gruppe werden dann die Zeilen zusammengefasst, in welchen die Probe in Vorwärtsrichtung abgetastet wird, und in einer zweiten Gruppe die Zeilen, in welchen die Probe in Rückwärtsrichtung abgetastet wird, d.h. die einem Bild entsprechen, welches bei Abtastung in Rückwärtsrichtung erzeugt wird. Die beiden Gruppenrohbilder werden dann anhand prägnanter und bis auf einen durch den Scanner verursachten Versatz deckungsgleicher Strukturen in den beiden Gruppenrohbildern miteinander korreliert, um eine relative Verschiebung der Spaltenpositionen im Bild zwischen Vorwärts- und Rückwärtsabtastung aufgrund dieses Versatzes des Scanners zu bestimmen. Diese Verschiebung wird dann auf eines der Gruppenrohbilder oder auf beide zu Teilen, beispielsweise je zur Hälfte angewandt, um den Versatz durch den Scanner auszugleichen. Dabei handelt es sich dann im einfachsten Fall um eine Operation, die auf alle Elemente, d.h. alle Pixel im Gruppenrohbild, gleichermaßen angewendet wird. Unter Umständen können die anzuwendenden Korrekturen aber auch von der Position in der Zeile, der x-Koordinate, abhängen. Die Korrelation erfolgt beispielsweise, indem in den Gruppenrohbildern bestimmte Strukturen, die in beiden Gruppenrohbildern vorhanden sind, und dominant sind, hinsichtlich ihrer Position im Bild analysiert werden, woraus eine Verschiebung bestimmt werden kann.

Die Verschiebung wird dann in den Gruppenrohbildern korrigiert, die so korrigierten Gruppenrohbilder werden dann wie zuvor durch pixelweise Summierung zum Rohbild zusammengesetzt und entfaltet. Ein Vorschaubild kann durch die einfache pixelweise Addition der beiden vorverrechneten Gruppenrohbilder erzeugt werden. Auf die vorangehend beschriebene Weise, die Daten zu korrigieren, wird zum einen Rechenzeit gespart, zum anderen können die benötigten Datenmengen reduziert werden, und nur die beiden vorverrechneten Gruppenrohbilder müssen vom Mikroskop an eine daran angeschlossene Auswerteeinheit zur Weiterverarbeitung - wie z.B. zur Berechnung der Verschiebung - übermittelt werden.

Dieses Verfahren ist besonders geeignet, wenn die Abtastung im sogenannten Multiplex-Modus durchgeführt wird, d.h. das nicht jede Zeile abgetastet wird, sondern nur jede n-te Zeile, wobei n bevorzugt eine natürliche Zahl zwischen 2 und 8 ist, die beiden Randwerte sind eingeschlossen. Auch höhere Werte für n, beispielsweise 10, sind möglich, n bezeichnet den sogenannten "*line step*". Die resultierenden Datensätze enthalten dann jeweils genauso viele Spalten wie das spätere Bild der Probe, jedoch entsprechend weniger Zeilen, so dass ein Datensatz - der hier nicht vollständig abgespeichert wird - zwischen der Hälfte und 7/8 kleiner ist als der Datensatz des fertigen Bildes. Die Bilder sind in der Richtung, in der die Zeilen ausgelassen werden, gestaucht. Eine Interpolation ist dennoch nicht notwendig: Der Abstand zwischen den Detektorelementen entspricht etwa dem Abstand zwischen zwei Zeilen in der Bildebene. Der Flächendetektor detektiert somit prinzipiell mehrere Zeilen gleichzeitig. Im Multiplex-Modus bei einem "*line* step" von 8 detektiert das zentrale Detektorelement in der Mitte des Flächendetektors beispielsweise die erste und die neunte Zeile, etc. Das nächste Element detektiert ungefähr die zweite und die zehnte Zeile. Bildet man die Sheppard-Summe der gestauchten Bilder der einzelnen Detektorelemente, so enthält diese alle Zeilen.

Selbstverständlich kann die vorangehend beschriebene Vorgehensweise auch mit dem in der DE 10 2017 122 858.6 beschriebenen Verfahren kombiniert werden, wenn die Pixel des Flächendetektors - die Detektorelemente - in Detektorelementgruppen eingeteilt werden, die eine, auf einer optischen Achse liegende zentrale Detektorelementgruppe und mindestens eine weitere, die zentrale Detektorelementgruppe bevorzugt ringförmig umgebende Detektorelementgruppe aufweisen. Für jede der Detektorelementgruppen wird dann ein vorverrechnetes Einzelrohbild berechnet, welche dann wie vorangehend zu den Zeilenrohbildern zusammengefasst werden, wodurch die Auflösung in der axialen z-Richtung nicht vermindert wird.

Es versteht sich, dass die vorstehend genannten und die nachstehend noch zu erläuternden Merkmale nicht nur in den angegebenen Kombinationen, sondern auch in anderen Kombinationen oder in Alleinstellung einsetzbar sind, ohne den Rahmen der vorliegenden Erfindung zu verlassen.

Nachfolgend wird die Erfindung beispielsweise anhand der beigefügten Zeichnungen, die auch erfindungswesentliche Merkmale offenbaren, noch näher erläutert. Diese Ausführungsbeispiele dienen lediglich der Veranschaulichung und sind nicht als einschränkend auszulegen. Beispielsweise ist eine Beschreibung eines Ausführungsbeispiels mit einer Vielzahl von Elementen oder Komponenten nicht dahingehend auszulegen, dass alle diese Elemente oder Komponenten zur Implementierung notwendig sind. Vielmehr können andere Ausführungsbeispiele auch alternative Elemente und Komponenten, weniger Elemente oder Komponenten oder zusätzliche Elemente oder Komponenten enthalten. Elemente oder Komponenten verschiedener Ausführungsbeispiele können miteinander kombiniert werden, sofern nichts anderes angegeben ist. Modifikationen oder Abwandlungen, welche für eines der Ausführungsbeispiele beschrieben werden, können auch auf andere Ausführungsbeispiele anwendbar sein. Zur Vermeidung von Wiederholungen werden gleiche oder einander entsprechende Elemente in verschiedenen Figuren mit gleichen Bezugszeichen bezeichnet und nicht mehrmals erläutert.

## Kurze Beschreibung der Zeichnungen

In den Figuren zeigen:

| | |
|---|---|
| Fig. 1 | eine Prinzipdarstellung eines Mikroskops für die hochauflösende Mikroskopie, |
| Fig. 2a)-c) | die Darstellung von Detektorelementen eines Detektors für das Mikroskop in Fig. 1, |
| Fig. 3 | mehrere gestauchte Datensätze, bei denen nur jede achte Zeile detektiert wird, |
| Fig. 4 | einen Zwischenschritt bei der Bestimmung eines Bildes bei der Probe und |
| Fig. 5 | das endgültige Bild der Probe. |

## Ausführliche Beschreibung der Zeichnungen

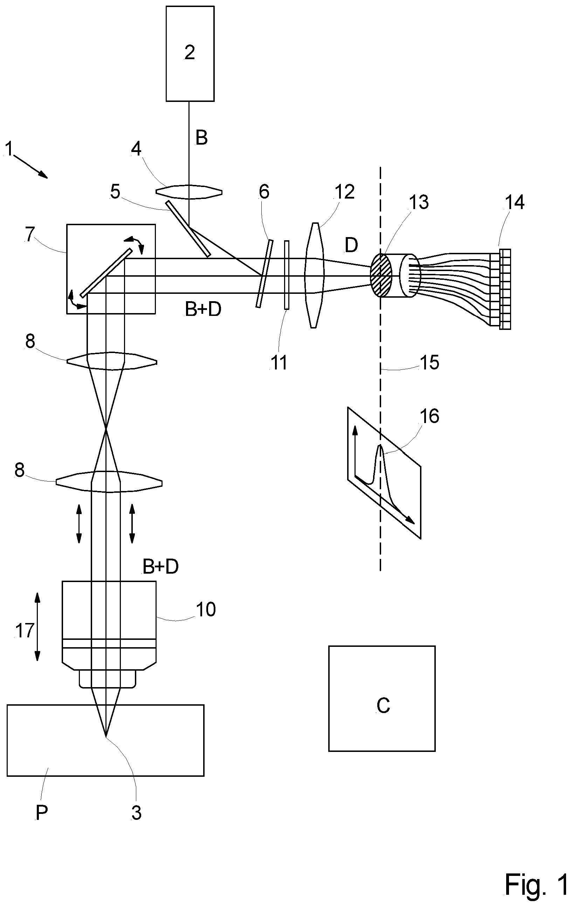

Fig. 1 zeigt schematisch ein Konfokalmikroskop 1 mit hoher, d.h. über die Beugungsgrenze gesteigerter Auflösung nach dem Prinzip des sogenannten Airy-Scans, wie es beispielsweise aus der EP 2 317 362 A1 bekannt ist. Es besitzt eine Lichtquelle 2 zur Beleuchtung einer Probe P mit einem Beleuchtungsfleck 3. Beleuchtungslicht B wird über eine Strahlformung 4 und einen Spiegel 5 zu einen Strahlteiler 6 geleitet. Der Strahlteiler 6 ist so ausgebildet, dass er möglichst viel des Beleuchtungslichts B reflektiert und zu einem Scanner 7 weiterleitet. Vom Scanner 7 wird das Beleuchtungslicht B über weitere Strahlformungsoptiken 8 und 9 zu einem Objektiv 10 geleitet. Das Objektiv 10 bündelt das Beleuchtungslicht B auf die Probe P in den Beleuchtungsfleck 3.

Das von der Probe P im Beleuchtungsfleck 3 erzeugte Detektionslicht D wird vom Objektiv 10 gesammelt und über den umgekehrten Weg wie das Beleuchtungslicht B zum Strahlteiler 6 geleitet. Der Strahlteiler 6 ist so gestaltet, dass er einen möglichst großen Anteil des Detektionslichts D transmittiert. Das so vom Strahlteiler 6 transmittierte Detektionslicht D wird über einen weiteren Filter 11 und eine weitere Strahlformungsoptik 12 zu einem Flächendetektor 13 geleitet. Der Flächendetektor 13 ist in der sogenannten Pinhole-Ebene angeordnet und detektiert das Detektionslicht D, erzeugt daraus elektrische Signale und leitet diese über Leiter 14 an eine Steuer- und Auswerteeinrichtung C - beispielsweise an einen Computer - weiter. Auf diese Weise wird ein Beugungsbild 15 aufgenommen, das, wie eine Beugungsstruktur 16 zeigt, beugungsbegrenzt ist.

Um ein Bild von der Probe P zu erhalten, wird der Beleuchtungsfleck 3 mit dem Scanner 7 punktweise über die Probe P bewegt. Aus den so gewonnenen, punktweisen Probensignalen wird von der Steuer- und Auswerteeinrichtung C ein Bild der Probe zusammengesetzt, welches beispielsweise auf einem Bildschirm dargestellt werden kann. Der Scanner 7 erlaubt es dabei, ein zweidimensionales Bild aufzunehmen, welches sich lateral, also in einer Ebene senkrecht zur optischen Achse des Objektivs 10, erstreckt. Für eine dreidimensionale Bildaufnahme wird der Abstand 17 des Objektivs 10 relativ zur Probe P variiert und bei jedem Abstand 17 ein zweidimensionales Bild von der Probe P aufgenommen. Die Steuer- und Auswerteeinrichtung C kann die so gewonnenen Signale zu einem dreidimensionalen Bild zusammensetzen.

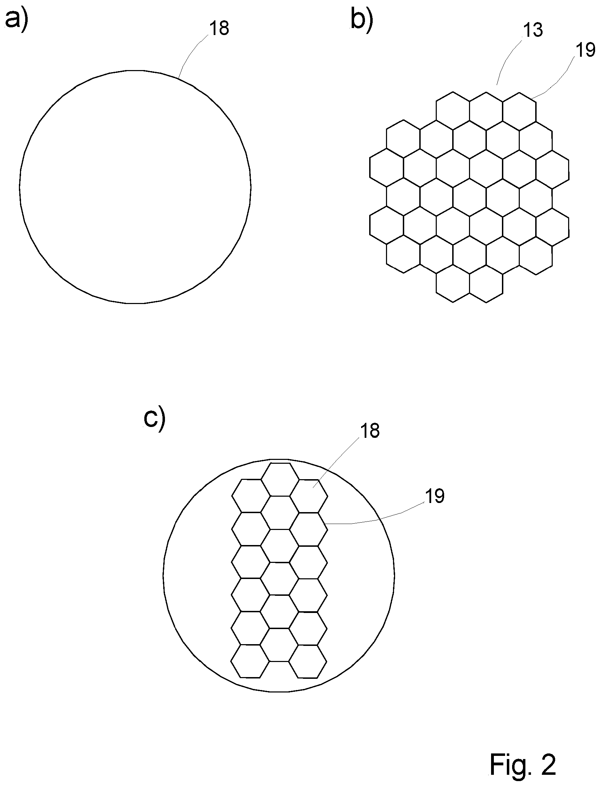

In Fig. 2a)-c) sind Detektoren eines konfokalen Mikroskops schematisch dargestellt. Fig. 2a) zeigt einen herkömmlichen Detektor mit einer einzigen sensitiven Fläche 18. Um die hohe Auflösung zu erreichen, besitzt der Flächendetektor 13 des Konfokalmikroskops 1 mehrere, auch als Pixel bezeichnete Detektorelemente 19, wie sie in Fig. 2b) gezeigt sind. Die hier beispielhaft gezeigte Anordnung besitzt 32 Detektorelemente 19.

Die Größe der Detektorelemente 19 ist so gewählt, dass sie wesentlich kleiner als das auf dem Flächendetektor 13 erzeugte Beugungsbild 15 sind. Gleichzeitig ist die Anzahl der Detektorelemente 19 und damit die gesamte Fläche des Flächendetektors 13 so gewählt, dass ein wesentlicher Anteil des Detektionslichts D für das Beugungsbild 15 detektiert werden kann. Die Detektorelemente 19 sind in dem Beispiel hexagonal oder wabenförmig ausgebildet und formen dementsprechend ein affines Raster mit einen Winkel von 60°.

Zum Vergleich ist in Fig. 2a) ein Detektor mit nur einem Detektionselement und einer sensitiven Fläche 18 angedeutet. Ein solcher Detektor würde für ein Konfokalmikroskop gewöhnlicher Auflösung verwendet werden. Die sensitive Fläche 18 deckt in diesem Fall einen großen Teil des Beugungsbildes 15 ab. Dabei ist der Begriff "gewöhnliche Auflösung" so zu verstehen, dass für die erreichte Auflösung das Abbe-Kriterium gilt. Beim Konfokalmikroskop 1 mit erhöhter Auflösung hingegen wirken Beleuchtung und Detektion so zusammen, dass theoretisch eine doppelt so hohe Auflösung erreicht werden kann. In der Praxis ist die Auflösungssteigerung etwas geringer, weil Strukturen nahe der Auflösungsgrenze nur noch sehr kontrastarm übertragen werden können. Es lassen sich tatsächlich auch Auflösungen bis zum etwa 1,7-fachen des Abbe-Kriteriums erreichen.

Der Flächendetektor 13 des Konfokalmikroskops 1 mit hoher Auflösung erfasst für jeden abgetasteten Punkt $P(\vec{r}, z)$ eine Vielzahl detektierter Signale $D_h(\vec{r}, z)$ entsprechend der Anzahl der Detektorelemente 19. $\vec{r}$ bezeichnet die laterale Probenposition, $z$ die axiale Probenposition und der Index $h$ bezeichnet das jeweilige Detektionselement 19.

Der Flächendetektor 13 erfasst ein Rohbildsignal von der Probe bestehend aus den einzelnen Signalen $D_h(\vec{r}, z)$. Die einzelnen Rohbildsignale unterscheiden sich voneinander, wobei die Unterschiede durch den lateralen Abstand des Beleuchtungslichtflecks 3 relativ zum vom jeweiligen Detektorelement 19 detektierten Probenbereich bestimmt sind. Die Rohbildsignale werden mathematisch durch eine Faltung des tatsächlichen Probenbildes $O(\vec{r}, z)$ mit der Punktspreizfunktion PSF $I_h(\vec{r}, z)$ des jeweiligen Detektorelements $h$ beschrieben:

$$D_h(\vec{r}, z) = I_h(\vec{r}, z) * O(\vec{r}, z)$$

Ziel ist es, aus allen $D_h(\vec{r}, z)$ ein Bild $\tilde{O}(\vec{r}, z)$ zusammenzusetzen, welches möglichst genau dem Original der Probe $O(\vec{r}, z)$ entspricht. Dies wird grundsätzlich durch eine Entfaltung - beispielsweise unter Berücksichtigung eines Wiener-Filters oder der reinen Sheppard-Summen - erreicht, wobei die Prozesse Entfaltung und Zusammensetzung prozesstechnisch ineinander übergehen können, und wobei im vorliegenden Fall die Auswertung so gestaltet werden wird, dass der Datentransfer zur Auswerteeinheit C möglichst gering gehalten wird, ebenso wie die anfallende Datenmenge im Mikroskop. Außerdem können andere Verfahren für die Korrektur des bandbegrenzten Abtastprozessen eingesetzt werden. Ein Beispiel sind iterative Verfahren wie die sogenannte "Lucy-Richardson Entfaltung".

Bei der im Folgenden beschriebenen Vorgehensweise wird die Probe P in einem Raster aus Zeilen zeilenweise abgetastet. Für jede aufgenommene Zeile wird bevorzugt unmittelbar nach oder auch während der Aufnahme ein vorverrechnetes Zeilenrohbild berechnet. Zum Schluss werden die vorverrechneten Zeilenrohbilder zu einem Rohbild der Probe zusammengefasst und entfaltet, um das Bild der Probe P zu erzeugen.

Bei der Abtastung müssen nicht alle Detektorelemente 19 eingeschaltet sein, es kann auch eine Auswahl von diesen Elementen eingeschaltet sein. In Fig. 2c) ist eine solche Auswahl aus insgesamt 18 Detektorelementen 19 gezeigt. Bei Multiplex-Aufnahmen entspricht diese Form in etwa dem Beleuchtungsprofil der Anregungs-Punktspreizfunktion. Weitere Auswahlkriterien sind die Auflösung in der Tiefe $z$ und/oder die Vermeidung von streifenförmigen Artefakten im Rohbild. In dem im Folgenden beschriebenen Beispiel wird außerdem nur jede achte Zeile abgetastet, was im Endergebnis Rohdaten für gestauchte Bilder liefern würde, wie sie in

Fig. 3 beispielhaft gezeigt sind, die Punkte deuten an, dass es sich um mehr Bilder handelt, nämlich um so viele, wie Detektorelemente 19 aktiv benutzt werden. Fig. 3 dient nur der Veranschaulichung, dass bei der Aufnahme Zeilen ausgelassen werden, tatsächlich werden diese Datensätze nicht erzeugt, da die Vorverrechnung bereits während der Aufnahme, also für jede aufgenommene Zeile erfolgt. Allerdings können die Datensätze auch erst aufgenommen und wie weiter unten beschrieben verrechnet werden. Die aufgenommenen Rohdaten können anschließend gelöscht werden. Anstelle jeder achten Zeile - dies bezieht sich auf das Bild - können auch andere Abstände gewählt werden, insbesondere auch kleinere Abstände, so dass beispielsweise für jede zweite Zeile die Probe abgetastet wird. Auch ist es möglich, jede Zeile der Probe abzutasten.

Im betrachteten Beispiel werden außerdem die Zeilen in zueinander komplementären Gruppen zusammengefasst. Für jede der Gruppen wird aus den vorverrechneten Zeilenrohbildern ein vorverrechnetes Gruppenrohbild zusammengesetzt, das Bild der Probe P wird dann erzeugt, indem die vorverrechneten Gruppenrohbilder zum Rohbild zusammengesetzt und entfaltet werden. In dem Beispiel wird die Probe bidirektional abgetastet, abwechselnd in einer Vorwärts- und einer dazu entgegengesetzten Rückwärtsrichtung. In einer ersten Gruppe werden dann die Zeilen zusammengefasst, in welcher die Probe in Vorwärtsrichtung abgetastet wird, und in einer zweiten Gruppe diejenigen Zeilen, in welcher die Probe in Rückwärtsrichtung abgetastet wird. Die Zuordnung einer Zeile zu einer Gruppe erfolgt also anhand der Scanrichtung. Wenn nur jede achte Zeile wie im vorliegenden Beispiel betrachtet wird, besteht auch keine Überlappung der Scanbereiche in vertikaler Richtung, so dass die Zeilenrohbilder tatsächlich unabhängig voneinander betrachtet werden können. Alternativ ist es auch möglich, zunächst vollständige Datensätze aus gestauchten Bildern aufzunehmen und aus diesen Datensätzen dann die Gruppenrohbilder zu berechnen. In der einen wie der anderen Weise erfolgt die Vorverrechnung durch Bildung der Sheppard-Summe, die für einen Ort $\vec{r}$ in der Probe P in einer bestimmten Probenebene zlautet:

$$\widetilde{D}(\vec{r}, z) = \sum_h D_h(\vec{r} - \vec{s}_h, z)$$

Im Ergebnis erhält man die beiden in Fig. 4 dargestellten Datensätze, der linke beispielsweise für die in Vorwärtsrichtung abgetasteten Zeilen und der rechte für die komplementären, rückwärts abgetasteten Zeilen. Die Kombination der beiden Bilder als einfache pixelweise Summe ergibt ein Rohbild, welches bereits als Vorschaubild einem Benutzer angezeigt werden kann, um weitere Schritte zu planen. Die beiden vorverrechneten Gruppenrohbilder, die jeweils die Sheppard-Summen für die in Vorwärtsrichtung bzw. die in Rückwärtsrichtung aufgenommenen Zeilen enthalten, werden gespeichert, wohingegen die Rohdaten der einzelnen Zeilen bzw. der einzelnen gestauchten Datensätze unmittelbar gelöscht werden können.

Das aus der pixelweise additiven Überlagerung der beiden Gruppenrohbilder erzeugte Rohbild der Probe entspricht jedoch noch nicht dem tatsächlichen Bild der Probe, da es Artefakte enthält, nämlich Verschiebungen entlang der Zeilen zwischen solchen Zeilen, die in Vorwärtsrichtung und solchen Zeichen, die in Rückwärtsrichtung abgetastet wurden, aufgrund eines technisch bedingten Versatzes des Scanners, der beim Wechsel zwischen den Scanrichtungen entsteht. Diese Verschiebungen werden anhand der beiden Gruppenrohbilder bestimmt, wozu diese miteinander korreliert werden. Anhand der Korrelation kann die Verschiebung in x-Richtung, also entlang der Zeile, bestimmt werden, d.h. der Unterschied zwischen der tatsächlichen Position des Scanners und der erwarteten. Wenn die Verschiebung bestimmt wurde, lassen sich die Gruppenrohbilder korrigieren, indem die beiden Datensätze beispielsweise jeweils um die Hälfte der berechneten Korrektur in entgegengesetzten Richtungen aufeinander zu verschoben werden. Auch die Verschiebung nur eines Datensatzes ist prinzipiell möglich, die Verzerrung oder auch - bei zeitlicher Änderung der Korrektur - deren Änderung bleibt jedoch im Bild sichtbar Diese Schritte finden in der Regel auf einem PC statt, nachdem die beiden vorberechneten Gruppenrohbilder an diesen vom Mikroskop übergeben wurden. Die beiden Gruppenrohbilder werden nach der Korrektur zu einem Rohbild der Probe zusammengesetzt, d.h. pixelweise und ohne weitere Rechenoperationen addiert. Anschließend wird das Rohbild noch entfaltet, um das in Fig. 5 gezeigte Bild der Probe P zu erzeugen. Dies geschieht auf eine Art und Weise, wie sie beispielsweise in der nicht vorveröffentlichten deutschen Anmeldung Nr. 10 2017 122 858.6 beschrieben ist.

Durch die vorangehend beschriebene Vorgehensweise werden zum einen weniger Daten erzeugt und wird die Verrechnung der Bilder vereinfacht, so dass der Ablauf von der Aufnahme der Rohdaten bis zur Erzeugung und Darstellung des korrigierten Bildes beschleunigt wird.

## Bezugszeichenliste

| 1 | Konfokalmikroskop |
|---|---|
| 2 | Lichtquelle |
| 3 | Beleuchtungsfleck |
| 4 | Strahlformer |
| 5 | Spiegel |
| 6 | Strahlteiler |
| 7 | Scanner |
| 8, 9 | Strahlformungsoptik |
| 10 | Objektiv |
| 11 | Filter |
| 12 | Strahlformungsoptik |

13      Flächendetektor
14      Leiter
15      Beugungsbild
16      Beugungsstruktur
17      Abstand
18      sensitive Flächen
19      Detektorelement

B      Beleuchtungslicht
C      Steuer- und Auswerteeinheit
D      Detektionslicht
P      Probe


**Patentansprüche**

1.  Verfahren zur hochauflösenden Scanning-Mikroskopie einer Probe (P), wobei

    - die Probe (P) mit Beleuchtungslicht (B) derart beleuchtet wird, dass das Beleuchtungslicht (B) an einem Punkt in oder auf der Probe (P) zu einem Beleuchtungsfleck (3) gebündelt wird,
    - der Punkt in ein Beugungsbild (15) auf einen Detektorelemente (19) aufweisenden Flächendetektor (13) abgebildet wird, wobei der Flächendetektor (13) durch seine Detektorelemente (19) eine Ortsauflösung aufweist, die eine Beugungsstruktur (16) des Beugungsbildes (15) auflöst,
    - die Probe (P) in einem Raster aus Zeilen und Spalten zeilenweise abgetastet wird, indem der Punkt relativ zur Probe (P) in verschiedene Scanpositionen mit einer Schrittweite verschoben wird, die kleiner als der Durchmesser des Beleuchtungsflecks (3) ist,
    - der Flächendetektor (13) ausgelesen wird und aus den Daten des Flächendetektors (13) und aus den diesen Daten zugeordneten Scanpositionen ein Bild der Probe (P) erzeugt wird, welches eine Auflösung aufweist, die über eine Auflösungsgrenze der Abbildung gesteigert ist, **dadurch gekennzeichnet, dass**
    - für jede aufgenommene Zeile vorverrechnete Zeilenrohbilder durch Bildung von Sheppard-Summen

    $$\widetilde{D}(\vec{r}, z) = \sum_h D_h(\vec{r} - \vec{s}_h, z)$$

    berechnet werden, wobei $h$ ein Index ist, welcher ein jeweiliges Detektorelement bezeichnet, $z$ eine axiale Probenposition bezeichnet, $\vec{r}$ eine laterale Probenposition bezeichnet, $\vec{s}_h$ eine laterale Verschiebung bezeichnet, und $D_h(\vec{r}, z)$ ein Signal, welches an einem Detektorelement $h$

detektiert wird und sich aus einer Faltung der Punktspreizfunktion $I_h(\vec{r},z)$ des jeweiligen Detektorelements $h$ mit dem tatsächlichen Probenbild $O(\vec{r}, z)$ ergibt, und
    - die vorverrechneten Zeilenrohbilder zu einem Rohbild zusammengefasst und mit der Punktspreizfunktion $\widetilde{I}(\vec{r}) = \Sigma_h I_h(\vec{r} - \vec{s}_h, z)$ entfaltet werden, um das Bild der Probe (P) zu erzeugen.

2.  Verfahren nach Anspruch 1, **dadurch gekennzeichnet, dass** die Zeilen in zueinander komplementären Gruppen zusammengefasst werden, für jede der Gruppen aus den vorverrechneten Zeilenrohbildern ein vorverrechnetes Gruppenrohbild zusammengesetzt wird und das Bild der Probe (P) erzeugt wird, indem die vorverrechneten Gruppenrohbilder zum Rohbild zusammengefasst und entfaltet werden.

3.  Verfahren nach Anspruch 2, **dadurch gekennzeichnet, dass** die Probe bidirektional in einer Vorwärts- und einer Rückwärtsrichtung abgetastet wird und in einer ersten Gruppe die Zeilen zusammengefasst werden, in welchen die Probe in Vorwärtsrichtung abgetastet wird, und in einer zweiten Gruppe die Zeilen zusammengefasst werden, in welchen die Probe in Rückwärtsrichtung abgetastet wird.

4.  Verfahren nach Anspruch 3, **dadurch gekennzeichnet, dass** die beiden Gruppenrohbilder zum Ausgleich einer Verschiebung der Spaltenposition im Bild beim Wechsel der Abtastrichtung miteinander korreliert werden, anhand der Korrelation die Verschiebung bestimmt wird, und die Verschiebung in den Gruppenrohbildern korrigiert wird.

5.  Verfahren nach einem der Ansprüche 1 bis 4, **dadurch gekennzeichnet, dass** nur jede n-te Zeile abgetastet wird, mit n einer natürlichen Zahl zwischen einschließlich 2 und einschließlich 8.

6.  Verfahren nach einem der Ansprüche 1 bis 5, **dadurch gekennzeichnet, dass** die Detektorelemente (19) des Flächendetektors (13) in Detektorelementgruppen eingeteilt werden, die eine, auf einer optischen Achse liegende zentrale Detektorelementgruppe und mindestens eine weitere, die zentrale Detektorelementgruppe ringförmig umgebende Detektorelementgruppe aufweisen, für jede Detektorelementgruppe ein vorverrechnetes Einzelrohbild durch Bildung der Sheppard-Summe berechnet wird, und die vorverrechneten Einzelrohbilder zu den Zeilenrohbildern zusammengefasst werden.

**Claims**

1. A method for high-resolution scanning microscopy of a sample (P), wherein

   - the sample (P) is illuminated with illumination light (B) in such a way that the illumination light (B) is focused at a point in or on the sample (P) to form an illumination spot (3),
   - the point is imaged in a diffraction image (15) onto an area detector (13) having detector elements (19), the area detector (13) having a spatial resolution due to its detector elements (19) which resolves a diffraction structure (16) of the diffraction image (15),
   - the sample (P) is scanned line by line in a grid of lines and columns by moving the point relative to the sample (P) to different scanning positions with a step size that is smaller than the diameter of the illumination spot (3),
   - the area detector (13) is read out and an image of the sample (P) is generated from the data of the area detector (13) and from the scanning positions assigned to these data, said image having a resolution which is increased beyond an image resolution limit, **characterized in that**
   - pre-calculated raw line images are calculated for each recorded line by forming Sheppard sums

$$\widetilde{D}(\vec{r}, z) = \sum_h D_h\left(\vec{r} - \vec{s}_h, z\right)$$

   where $h$ is an index denoting a respective detector element, $z$ denotes an axial sample position, $\vec{r}$ denotes a lateral sample position, $\vec{s}_h$ denotes a lateral displacement, and $\tilde{D}_h(\vec{r}, z)$ is a signal which is detected at a detector element $h$ and results from a convolution of the point spread function $I_h(\vec{r}, z)$ of the respective detector element $h$ with the actual sample image $O(\vec{r}, z)$, and
   - the pre-calculated raw line images are combined into a raw image and deconvolved with the point spread function $\tilde{I}(\vec{r}) = \Sigma_h I_h(\vec{r} - \vec{s}_h, z)$ to create the image of the sample (P).

2. The method according to claim 1, **characterized in that** the lines are combined in mutually complementary groups, a pre-calculated group raw image is composed for each of the groups from the pre-calculated line raw images and the image of the sample (P) is generated by combining and deconvolving the pre-calculated group raw images to form the raw image.

3. The method according to claim 2, **characterized in that** the sample is scanned bidirectionally in a forward and a backward direction and the lines in which the sample is scanned in the forward direction are combined in a first group and the lines in which the sample is scanned in the backward direction are combined in a second group.

4. The method according to claim 3, **characterized in that** the two group raw images are correlated with one another to compensate for a shift in the column position in the image when the scanning direction is changed, the shift is determined on the basis of the correlation, and the shift is corrected in the group raw images.

5. The method according to any one of claims 1 to 4, **characterized in that** only every nth line is scanned, with n being a natural number between 2 and 8 inclusive.

6. The method according to any one of claims 1 to 5, **characterized in that** the detector elements (19) of the area detector (13) are divided into detector element groups which have a central detector element group located on an optical axis and at least one further detector element group surrounding the central detector element group in a ring shape, a precalculated individual raw image is calculated for each detector element group by forming the Sheppard sum, and the precalculated individual raw images are combined to form the line raw images.

**Revendications**

1. Procédé de microscopie à balayage haute résolution d'un échantillon (P), dans lequel

   - l'échantillon (P) est éclairé par une lumière d'éclairage (B) de telle sorte que la lumière d'éclairage (B) est concentrée en un point dans ou sur l'échantillon (P) pour former une tache d'éclairage (3),
   - le point est reproduit dans une image de diffraction (15) sur un détecteur de surface (13) présentant des éléments de détection (19), le détecteur de surface (13) présentant, par ses éléments de détection (19), une résolution spatiale qui résout une structure de diffraction (16) de l'image de diffraction (15),
   - l'échantillon (P) est balayé ligne par ligne dans une grille de lignes et de colonnes en déplaçant le point par rapport à l'échantillon (P) dans différentes positions de balayage avec un pas qui est inférieur au diamètre de la tache d'éclairage (3),
   - le détecteur de surface (13) est lu et une image de l'échantillon (P) est produite à partir des données du détecteur de surface (13) et des positions de balayage associées à ces données, ladite image présentant une résolution qui est augmentée au-delà d'une limite de résolution d'image, **caractérisé en ce que**

- pour chaque ligne enregistrée, des images brutes de lignes pré-calculées sont calculées en formant des sommes de Sheppard

$$\widetilde{D}(\vec{r}, z) = \sum_h D_h \left(\vec{r} - \vec{s}_h, z\right)$$

où $h$ est un indice qui désigne un élément de détection respectif, $z$ désigne une position axiale de l'échantillon, $\vec{r}$ désigne une position latérale de l'échantillon, $\vec{s}_h$ désigne un déplacement latéral, et $\widetilde{D}_h(\vec{r}, z)$ est un un signal qui est détecté au niveau d'un élément de détection $h$ et qui résulte d'une convolution de la fonction d'étalement de point $I_h(\vec{r}, z)$ de l'élément de détection $h$ correspondant avec l'image réelle de l'échantillon $O(\vec{r}, z)$, et

- les images brutes de lignes pré-calculées sont combinées en une image brute et déconvolues à l'aide de la fonction d'étalement de point $\widetilde{I}(\vec{r}) = \Sigma_h I_h(\vec{r} - \vec{s}_h, z)$ afin de créer l'image de l'échantillon (P).

2. Procédé selon la revendication 1, **caractérisé en ce que** l'on regroupe les lignes en groupes complémentaires les uns des autres, on compose pour chacun des groupes une image brute de groupe pré-calculée à partir des images brutes de ligne pré-calculées, et on génère l'image de l'échantillon (P) en regroupant et en déconvoluant les images brutes de groupe précalculées pour former l'image brute.

3. Procédé selon la revendication 2, **caractérisé en ce que** l'échantillon est balayé de manière bidirectionnelle dans une direction vers l'avant et dans une direction vers l'arrière et **en ce que** les lignes dans lesquelles l'échantillon est balayé dans la direction vers l'avant sont regroupées dans un premier groupe et les lignes dans lesquelles l'échantillon est balayé dans la direction vers l'arrière sont regroupées dans un deuxième groupe.

4. Procédé selon la revendication 3, **caractérisé en ce que** les deux images brutes de groupe sont corrélées entre elles pour compenser un décalage de la position de colonne dans l'image lors du changement de la direction de balayage, le décalage est déterminé à l'aide de la corrélation, et le décalage est corrigé dans les images brutes de groupe.

5. Procédé selon l'une quelconque des revendications 1 à 4, **caractérisé en ce que** seule une ligne sur n est balayée, n étant un nombre naturel compris entre 2 et 8 inclus.

6. Procédé selon l'une quelconque des revendications 1 à 5, **caractérisé en ce que** les éléments de détection (19) du détecteur de surface (13) sont divisés en groupes d'éléments de détection qui présentent un groupe d'éléments de détection central situé sur un axe optique et au moins un autre groupe d'éléments de détection entourant de manière annulaire le groupe d'éléments de détection central, une image brute individuelle précalculée est calculée pour chaque groupe d'éléments de détection en formant la somme de Sheppard, et les images brutes individuelles précalculées sont regroupées pour former les images brutes de ligne.

Fig. 1

Fig. 2

Fig. 3

Fig. 4

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2317362 A1

- DE 102017122858

**In der Beschreibung aufgeführte Nicht-Patentliteratur**

- **KLAUS WEISSHART.** The Basic Principle of Airyscanning. *Anmelderin veröffentlicht,* Juli 2014